# EUROPEAN PATENT SPECIFICATION

(11) **EP 2 514 610 B1**
(45) Date of publication and mention of the grant of the patent: **27.11.2013**
(21) Application number: 12002692.7
(22) Date of filing: 17.04.2012
(51) Int. Cl.: B60C 25/05, B60C 25/138

(54) **A lifting apparatus for tyre changing machines**
Hebevorrichtung für Reifenwechselmaschinen
APPAREIL DE LEVAGE POUR MACHINES DE CHANGEMENT DE PNEUS

(30) Priority: 18.04.2011 IT MO20110082
(43) Date of publication of application: 24.10.2012
(73) Proprietor: Ferrari, Gino, 42015 Correggio (RE) (IT); Maioli, Franco, 42015 Correggio (Modena) (IT)
(72) Inventor: Ferrari, Gino, 42015 Correggio (RE) (IT); Maioli, Franco, 42015 Correggio (Modena) (IT)
(74) Representative: Bergamini, Silvio

(56) References cited:
- EP-A1- 1 982 851
- EP-A1- 2 062 753
- EP-A2- 0 032 759
- EP-A2- 1 253 026

## Description

### Field of the invention

The invention relates to a lifting apparatus for a tyre demounting machine.

### Background art

A tyre demounting machine is known to comprise a base with a device for supporting and locking vehicle wheels mounted thereto, for demounting and mounting tyres from and to rims.

This device is known in the art as a "self-centering unit" and consists of a platform that may be rotatably driven and has gripping and locking elements which, symmetrically converge to or diverge from the vertical or substantially vertical axis of rotation of the platform, to grip or release the edges of the wheel rims and lock them in a position substantially coaxial to the axis of rotation of the platform.

For tyre replacement, or for any other operation that requires demounting or remounting, the platforms define a wheel support plane, which is substantially horizontal and is raised from the ground, to assist the work of tyre repairers.

Nevertheless, this feature involves the problem that tyre repairers are required to make considerable physical efforts to manually lift the wheels and lay them on the support surface for processing and to remove them when processing is completed.

In an attempt to obviate this drawback, lifting apparatus have been developed, which can pick up a wheel from the ground plane and move it to the lying plane of the support platform, and vice versa, without requiring excessive efforts from tyre repairers.

One of such lifting apparatus is known from EP 2,062,753, which discloses a lifting apparatus according to the preamble of claim 1.

This patent discloses a tyre demounting machine, which is equipped with a lifting apparatus consisting of a pair of movable frames, simultaneously moved by a single fluid-dynamic actuator, namely a pneumatic cylinder, which is vertically supported by the base of the tyre demounting machine.

A first frame is designed to define a support plane, for supporting a wheel in a horizontally lying position and to move vertically parallel to itself, in both directions relative to the support platform, between a lowered level and a raised level above the support plane of the platform, whereas a second frame, having an outwardly facing wheel supporting portion, for a wheel picked up from the ground level, consisting of a substantially vertical support surface and two forks perpendicularly extending therefrom for the tyre tread to rest thereon, is articulated to the base of the tyre demounting machine at a hinge point, to pivot thereabout during lifting and lowering, at the same time as the first frame, as mentioned above.

The second frame is rotated by the thrust directly exerted thereon by the cylinder by mechanical coupling of a peg extending transverse to the cylinder rod, and slidably engaging a cam profile, which guides it and is formed on the post that bears the wheel supporting portion, on the side facing away from the wheel supporting surface.

The cam profile has limit stop abutments at its opposite ends, for stopping the relative sliding motion of the peg and the profile, to stop either the lifting motion and the lowering motion.

When the first frame is in the top lifted position, its wheel supporting surface and the support surface of the second frame are horizontally aligned and substantially coplanar, and the rotation of the forks of the second frame automatically and progressively pushes the wheel loaded on the support surface of the first frame.

Then, both frames are progressively lowered and the wheel is automatically released onto the support surface of the platform, upon which the wheel is locked in a known fashion.

In reverse operation, the tyre repairer picks up the wheel by lifting it from the support surface of the platform and transfers it to the support surface of the first frame and then to the support surface of the second frame, which is lowered and rotated to move the wheel, in a substantially vertical position, to the ground plane, where it can be picked up by the tyre repairer to be mounted to a target vehicle.

This prior art suffers from certain drawbacks.

A first drawback is that, for simultaneous operation on both frames, the actuator cylinder requires the provision of members designed to be mechanically coupled to the rod of the actuator cylinder on both first and second frames.

Furthermore, the second frame has to be equipped with guide members, in this case a cam profile having a definite length between the two limit stop end abutments and a peg slidably engaged on it to guide its lifting and rotating motion such that it is neither excessive nor inadequate.

A second drawback is that the wheel lifted from the second frame is substantially free and simply lies on its forks, whereby any excessively quick lifting movement may exert a thrust on the wheel on the second frame such that it may slide onto the first frame at an excessive and uncontrolled speed, with the wheel possibly falling off the support surface of the first frame, to the side facing away from the forks.

### Objects of the invention

One object of the invention is to improve the prior art.

Another object of the invention is to provide a lifting apparatus for tyre demounting machines that affords easy handling of vehicle wheels to be laid on and removed from a self-centering apparatus of a tyre demounting machine, while ensuring controlled movement thereof.

A further object of the present invention is to provide a lifting apparatus for tyre demounting machines, that is adapted for application to existing machines having no such apparatus, without requiring extensive modification of their structures.

The invention relates to a lifting apparatus for tyre demounting machines as defined in the features of claim 1.

The invention affords the following advantages:
- It can easily and effortlessly lift and lower vehicle wheels to lay them on and remove them from a support and operating surface of a tyre demounting machine, typically the support and operating surface of a self-centering device;
- It can control wheel stability at any time of the lifting and lowering process;
- It allows the lifting apparatus to be used on both newly fabricated machines and existing machines, without requiring any significant change of their structure.

### Brief description of the drawings

Further characteristics and advantages of the invention will be more apparent upon reading of the description of an embodiment of a lifting apparatus for tyre demounting machines, which is illustrated by way of example and without limitation in the annexed drawings, in which:
Figure 1 is a phantom broken away side view of a front portion of a tyre demounting machine having a lifting apparatus of the invention;
Figure 2 is a corresponding top view of the front portion of Figure 1;
Figure 3 is a large scale view of the front portion of Figure 1.

### Detailed description of a preferred embodiment

Referring to the figures, numeral 1 generally designates a front portion of a tyre demounting machine comprising a base 2, with a known rotating device 3 mounted thereto for supporting a locking a wheel "R" to be stripped of its tire, which is rotatably driven by a motor unit "M", arranged within the base.

The rotating device 3 is typically known as "self-centering unit" and will be designated as such hereinafter.

The self-centering unit 3 defines a substantially horizontal support surface "P1", upon which the wheels "R" of a vehicle are laid and locked for tyre processing.

The self-centering unit 3 comprises a vertical threaded and rotating shaft 4, having a longitudinal axis 4a, and designed to fit into the central hole of the rim of the wheel "R", for a conical locking member (not shown) to be screwed thereto to lock the wheel "R" on the support surface "P1".

As shown in the figures, a fixed angular bearing frame 5 is mounted to the base 2, namely to a designated front portion thereof, comprising a vertical side 2A and a part of the horizontal surface 2B which forms a front edge of the base 2 with the vertical side 2A, and is fixed to both sides of the base 2 and is composed of two posts and two longitudinal members.

A first movable frame is associated in articulated fashion with such fixed bearing frame 5, and is hinged thereto about a horizontal hinge axis 6, which is referenced 7 in the figures.

In practice, the first movable frame 7 comprises a truss construction composed of parallel longitudinal members 8 and connecting cross members 9 fixed between the longitudinal members 8.

As shown in the figures, the longitudinal members 8 are folded substantially at the center, and form two segments that define a slightly obtuse angle "α", to substantially conform with the profile of the front portion of the base 2.

Therefore, in a rest position of the first movable frame 7, the two segments of the longitudinal members 8, referenced 108 and 208 respectively, are arranged substantially parallel to the vertical side 2A and the horizontal surface 2B respectively.

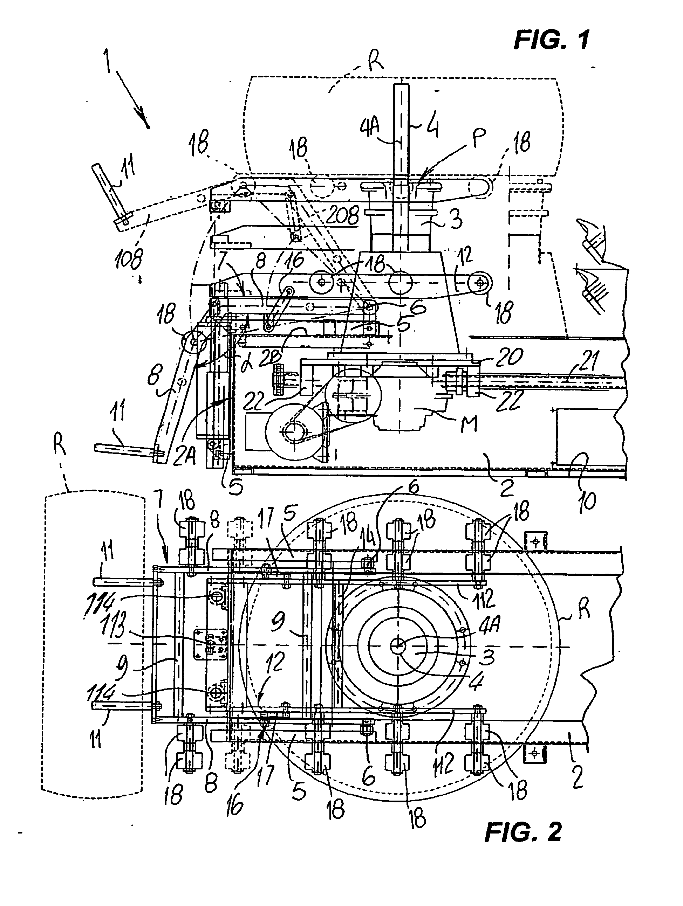

In fact, since the angle "a" is slightly obtuse, as mentioned above, the segment 108 slightly deviates from its parallel relation to the side 2A, and diverges therefrom towards the ground 10 and has two parallel supports 11 at its lower free end, which extend outwards in a cantilever fashion to define a support for the wheel "R", as schematically shown in Figure 2.

A second movable frame 12 is also mounted to the fixed frame 5, and is horizontally supported, with an actuator unit 113 and two vertical and parallel guiding bars 114, which are all fixed to a cross member 15 of the fixed bearing frame 5.

The second movable frame 12 is supported in cantilever fashion and extends towards the self-centering unit 3.

The second frame 12 has a U shape facing towards the self-centering unit 3 and composed of two parallel longitudinal members 112, which are fixedly connected together by at least one cross member 14.

The two parallel longitudinal members 112 have such a length that they can extend in both directions from the self-centering unit 3 and include it therebetween, while being so spaced as to avoid any interference with the latter, even when the second frame 12 is lifted or lowered.

Coupling means 16 are placed between the second frame 12 and the first frame 7, and are designed to drive the first frame 7 by the movement of the second frame 12, while causing it to pivot about the hinge axis 6, when the second frame 12 is lifted or lowered.

In one embodiment, the coupling means 16 comprise a coupling rod 17, at each side of the first and second frames 7 and 12, which rod has its ends hinged at corresponding points 19B of the second frame 12 and 19A of the first frame 7 respectively.

Both the first frame 7 and the second frame 12 have sets of rollers 18 which are freely rotatably supported about respective substantially horizontal axes of rotation, and which have outer profiles projecting above the longitudinal members 108, 208 of the first frame 7 and the longitudinal members 112 of the second frame 12, thereby defining a support plane for a wheel "R", slightly raised from the plane of the longitudinal members 112; thus the wheel "R" may rest on these projecting profiles and be easily displaced, for instance pushed, between the first frame 7 and the second frame 12, when both are in a completely raised position, as shown in Figure 1 by broken lines.

The operation of the lifting apparatus for tyre demounting machines is as follows: when a tyre repairer has to lay a wheel "R" on the support surface "P1" of the self-centering unit 3, he/she controls the actuator unit 113, e.g. by pushing a control pedal typically found in tyre demounting machines, to lower to the lowermost position in which, as shown in Figure 1 by solid lines, the first frame 7 has the segment 108 substantially lying along the side 2A of the base 2 and the two supports 11 facing outwards.

The second frame 12 is completely lowered on the horizontal surface 2B and the longitudinal members 112 lie on each side of the self-centering unit 3, below the support surface "P1".

Once the tyre repairer has loaded a wheel "R" on the supports 11, as schematically shown in Figure 2, it operates the actuator unit 113, thereby causing the second frame 12 to be progressively lifted parallel to itself, i.e. maintaining the horizontal position of the longitudinal members 112, which are progressively lifted above the support surface "P1".

The vertical displacement of the second frame 12 is guided by the two guiding bars 114 which maintain it horizontal and parallel to itself during the lifting and lowering movements.

At the same time, the two coupling rods 17 drive the first frame 7, which is moved upwards together with the second frame 12, the latter having a driving function.

Nevertheless, since the first frame 7 is hinged to the fixed frame 5 about the hinge axis 6, the first frame 7 progressively pivots about such hinge axis 6, thereby progressively rotatably lifting the two supports 11 and, as a result, the wheel "R", which, upon reaching the top lifted position, may be manually pushed by the tyre repairer from the first frame 7 to the second frame 12, by sliding on rollers 18 until the central hole of the rim is coaxially aligned with the longitudinal axis 4A.

As soon as this state is achieved, the tyre repairer controls the actuator unit 113 to perform a lowering movement, which causes the second frame 12 and the first frame 7 to be moved down together, and to release the wheel "R" on the support surface "P1" of the self-centering unit 3.

Then, the tyre repairer fits the rotating shaft 4 into the seat provided therefore in the self-centering unit 3 and locks the wheel "R" thereon, by screwing a known locking cone thereon.

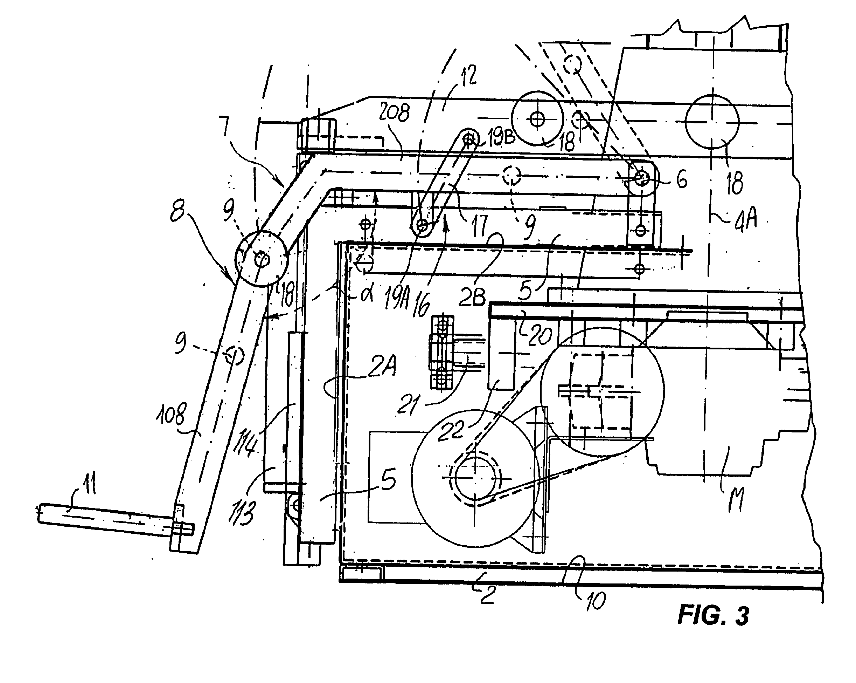

As shown in Figures 1 and 3, the motor "M" is mounted to a bearing plate 20 which is in turn mounted to a two-way worm 21.

The worm 21 extends through two perforated and matingly threaded flanges, which are integral with the bearing plate 20 and extend downwards therefrom parallel to each other.

When the wheel "R" is locked on the self-centering unit 3, the tyre repairer adapts the position of the self-centering unit 3 according to the diameter and to the post of the tyre demounting machine 1, which usually carries the tools, rotatably drives the worm 21 and the whole assembly composed of the self-centering unit 3 and the motor "M" horizontally moves towards or away from the post.

As soon as the process on the tyre is completed, the tyre repairer removes the shaft 4 to release the wheel "R" from its locked state, and operates the actuator unit 113 in lifting mode again, to move the second frame 12 and the first frame 7 as described above, but with no load thereon.

As the second frame 12 is being lifted, it picks up the free wheel "R" from the support plane "P1", and as soon as wheel rests on the rollers 18, the tyre repairer may push it actually with no effort to the first frame 7, still on the supports 11.

Now, the tyre repairer further controls the actuator unit 13 in lowering mode, to bring the wheel "R" substantially level with the ground, from which it may be picked up to be mounted to a target vehicle.

It shall be noted that, when the first frame 7 and the second frame 12 are in the top lifted position, the support surface of the first frame 7 and that of the second frame 12 are not coplanar, i.e. the support surface of the first frame 7 is slightly inclined downwards, which will ensure that the wheel "R" will be stable on the supports 11 and the rollers 18 of the segment 108 until the tyre repairer decides to manually move it in a controlled fashion.

The above disclosed invention was found to fulfill the intended objects.

The invention so conceived is susceptible to a number of changes and variants within the inventive concept.

Furthermore, all the details may be replaced by other technically equivalent parts.

In practice, any materials, shapes and sizes may be used as needed, without departure from the scope of the following claims.

## Claims

1. A lifting apparatus for tyre changing machines (1) having a wheels resting and blocking device (3) on a support plane (P1), comprising:
- A bearing fixed frame (5) to be fixed on a base (2) of a tyre changing machine (1);
- A first movable frame (7) equipped with resting means (11, 108) for a wheel (R) and rotatably hinged to a hinge point (6) of said fixed frame (5), so as to rotary-lift or to rotary-lower the wheel (R) with respect to said support plane (P1);
- A lifting arrangement (113, 114) arranged on said bearing frame (5); and
- A second movable frame (12) adapted to be supported by said lifting arrangement (113, 114) and to be reciprocated in parallel between a lifting and a lowering with respect to said support plane (P1), **characterized in that** said first movable frame (7) is adapted to be drawn by said second movable frame (12).

2. A lifting apparatus according to claim 1, wherein said first movable frame (7) comprises linking means (16) to said second movable frame (12), so as to rotate during said lifting and lowering of said second movable frame (12).

3. A lifting apparatus according to claim 1, wherein said first movable frame (7) comprises a couple of parallel longitudinal members (8) joined together by cross-members (9) and bent in a bending zone , so as to form a couple of resting sections (108) of a wheel (R) to be rotary-lifted or rotary-lowered, said couple of resting sections (108) being equipped at one end to be regarded as a lower end with a couple of bearings (11) for supporting said wheel (R).

4. A lifting apparatus according to claim 1, wherein said second movable frame (12) comprises a further couple of longitudinal members (112) which reciprocally parallel and joined together by at least one cross-member (14) and shape a "U" shaped structure facing said resting and blocking device (3), said further longitudinal members (112) having a length such as to extend bilaterally to said resting and blocking device (3) without interfering with the latter during said lifting and lowering of said second movable frame (12).

5. A lifting apparatus according to claim 1, wherein said lifting arrangement comprises:
- At least an fluid dynamic straight actuator (113) fitted between said fixed frame (5) and second movable frame (12); and
- A couple of guiding bars (114) fitted between said second movable frame (12) and said fixed frame (5), so as to guide said second movable frame (12) in parallel during said lowering and lifting.

6. A lifting apparatus according to claim 1, wherein said linking means comprise connecting rods (17) having freely rotating ends (19A, 19B) hinged to hinging points respectively of said longitudinal members (8) of said first movable frame (7) and further longitudinal members (112) of said second movable frame (12).

7. A tyre changing machine **characterized in that** it comprises a lifting apparatus for tyre changing machine according to one or more of preceding claims.

## Patentansprüche

1. Eine Hebevorrichtung für Reifenwechselmaschinen (1) mit einer Radablage- und Befestigungsvorrichtung (3) auf einer Tragebene (P1), umfassend:
- einen lagerfesten Rahmen (5) zur Befestigung an einem Sockel (2) einer Reifenwechselmaschine (1),
- einen ersten beweglichen Rahmen (7), der mit Ablageeinrichtungen (11, 108) für ein Rad (R) ausgestattet ist und drehbar angelenkt ist an ein Scharnier (6) des festen Rahmens (5), um das Rad (R) zu Dreh-Heben oder zu Dreh-Senken relativ zu der Tragebene (P1),
- eine Hebevorrichtung (113, 114), die auf dem Lager-Rahmen (5) angeordnet ist, und
- einen zweiten beweglichen Rahmen (12), der ausgelegt ist, um von der Hebevorrichtung (113, 114) getragen zu werden und parallel hin und her bewegt zu werden zwischen einem Heben und einem Senken relativ zu der Tragebene (P1),
**dadurch gekennzeichnet, dass** der erste bewegliche Rahmen (7) ausgelegt ist gezogen zu werden von dem zweiten beweglichen Rahmen (12).

2. Eine Hebevorrichtung gemäß Anspruch 1, **dadurch gekennzeichnet, dass** der erste bewegliche Rahmen (7) Verbindungseinrichtungen (16) aufweist zu dem zweiten beweglichen Rahmen (12), um zu rotieren während des Hebens und Senkens des zweiten beweglichen Rahmens (12).

3. Eine Hebevorrichtung gemäß Anspruch 1, **dadurch gekennzeichnet, dass** der erste bewegliche Rahmen (7) ein Paar paralleler longitudinaler Elemente (8) aufweist, die zusammen verbunden sind durch Kreuzelemente (9) und gebogen sind in einem Biegebereich, um so ein Paar Ablagebereiche (108) für das Dreh-Heben oder Dreh-Senken des Rades (R) zu bilden, wobei das Paar Ablagebereiche (108) an einem als unteres Ende anzusehenden Ende mit einem Paar Lager (11) ausgestattet ist, um das Rad (R) zu tragen.

4. Eine Hebevorrichtung gemäß Anspruch 1, **dadurch gekennzeichnet, dass** der zweite bewegliche Rahmen (12) ein weiteres Paar longitudinaler Elemente (112) aufweist, die reziprok parallel und zusammen verbunden sind durch mindestens ein Kreuzelement (14) und eine U-förmige Struktur bilden gegenüber der Ablage- und Befestigungsvorrichtung (3), wobei die weiteren longitudinalen Elemente (112) eine Länge haben, so dass sie sich zweiseitig zu der Ablage- und Befestigungsvorrichtung (3) erstrecken, ohne mit der Letzteren zu wechselwirken während des Hebens und Senkens des zweiten beweglichen Rahmens (12).

5. Eine Hebevorrichtung gemäß Anspruch 1, **dadurch gekennzeichnet, dass** die Hebeanordnung umfasst:
- mindestens einen fluiddynamischen Aktuator (113), der zwischen den festen Rahmen (5) und den zweiten beweglichen Rahmens (12) eingepasst ist, und
- ein Paar Führungsbalken (114), das zwischen den zweiten beweglichen Rahmen (12) und den festen Rahmen (5) eingepasst ist, um den zweiten beweglichen Rahmen (12) parallel zu führen während des Hebens und Senkens.

6. Eine Hebevorrichtung gemäß Anspruch 1, **dadurch gekennzeichnet, dass** die Verbindungseinrichtungen verbindende Stangen (17) aufweisen mit frei rotierenden Enden (19A, 19B), die an die Scharniere jeweils der longitudinalen Elemente (8) des ersten beweglichen Rahmens (7) und des weiteren Paars longitudinaler Elemente (112) des zweiten beweglichen Rahmens (12) angelenkt sind.

7. Eine Reifenwechselmaschine, **dadurch gekennzeichnet, dass** sie eine Hebevorrichtung für Reifenwechselmaschine gemäß einem oder mehreren der vorhergehenden Ansprüche aufweist.

## Revendications

1. Appareil de levage pour les machines de remplacement des pneus (1) ayant un dispositif d'appui et de blocage des roues (3) sur une surface d'appui (P1), comprenant :
- Un châssis fixe de support (5) à fixer sur une base (2) d'une machine de remplacement des pneus (1) ;
- Un premier châssis mobile (7) équipé de moyens d'appui (11, 108) pour une roue (R) et articulé à pivotement à un point de charnière (6) dudit châssis fixe (5), de manière à soulever en tournant ou à abaisser en tournant la roue (R) par rapport à la surface d'appui (P1) ;
- Un système de levage (113, 114) disposé sur ledit châssis de support (5) ; et
- Un deuxième châssis mobile (12) adapté pour être soutenu par ledit système de levage (113,114) et être actionné par un mouvement alternatif en parallèle entre un soulèvement et un abaissement par rapport à ladite surface d'appui (P1),
**caractérisé en ce que** ledit premier châssis mobile (7) est adapté pour être entraîné par ledit deuxième châssis mobile (12).

2. Appareil de levage selon la revendication 1, où ledit premier châssis mobile (7) comprend un moyen de liaison (16) audit deuxième châssis mobile (12), de manière à tourner durant lesdits soulèvement et abaissement dudit deuxième châssis mobile (12).

3. Appareil de levage selon la revendication 1, où ledit premier châssis mobile (7) comprend une paire de longerons longitudinaux (8) joints par des traverses (9) et fléchi dans une zone de fléchissement, de manière à former une paire de sections d'appui (108) d'une roue (R) pour être soulevée en tournant ou abaissée en tournant, ladite paire de sections d'appui (108) étant équipée à une extrémité à considérer comme une extrémité inférieure avec une paire de paliers (11) pour supporter ladite roue (R).

4. Appareil de levage selon la revendication 1, où ledit deuxième châssis mobile (12) comprend une paire supplémentaire de longerons longitudinaux (112) réciproquement parallèles et joints par au moins une traverse (14) et une structure ayant une forme en "U" faisant face audit dispositif d'appui et de blocage (3), lesdits longerons longitudinaux supplémentaires (112) ayant une longueur telle qu'ils s'étendent bilatéralement audit dispositif d'appui et de blocage (3) sans interférer avec ce dernier durant lesdits soulèvement et abaissement dudit deuxième châssis mobile (12).

5. Appareil de levage selon la revendication 1, où ledit système de levage comprend :
- Au moins un actionneur droit fluido-dynamique (113) ajusté entre ledit châssis fixe (5) et le deuxième châssis mobile (12) ; et
- Une paire de barres de guidage (114) ajustées entre ledit deuxième châssis mobile (12) et ledit châssis fixe (5, de manière à guider ledit deuxième châssis mobile (12) en parallèle durant lesdits abaissement et soulèvement.

6. Appareil de levage selon la revendication 1, où ledit moyen de liaison comprend des bielles (17) ayant des extrémités tournant librement (19A, 19B) articulées à des points d'articulation respectivement desdits longerons longitudinaux (8) dudit premier châssis mobile (7) et aux longerons longitudinaux supplémentaires (112) dudit deuxième châssis mobile (12).

7. Machine de remplacement des pneus **caractérisée en ce qu'**elle comprend un appareil de levage pour une machine de remplacement des pneus selon une ou plusieurs revendications précédentes.
